# EUROPEAN PATENT APPLICATION

(11) **EP 2 106 113 A1**
(43) Date of publication of application: **30.09.2009**
(21) Application number: 08290275.0
(22) Date of filing: 25.03.2008
(51) Int. Cl.: H04M 3/523

(54) **Management system of a user's telephone call**

(71) Applicant: Alcatel Lucent, 75008 Paris (FR)
(72) Inventor: Avril, Gérard, 78600 Maisons Laffite (FR); Abou Chakra, Rabih, 95240 Cormeilles en Parisis (FR)
(74) Representative: Sayettat, Julien Christian

(57) **Abstract**

Management system of a user's (1) telephone call to establish communication between said user (1) and a selected interlocutor, said system comprising a communication server (2) to receive telephone calls and route them to an interactive voice response engine (4); an application server (3) comprising means to initiate an identification session between the communication server (2), the interactive voice response engine (4) and a database (5), in order to collect information concerning the identify of the user (1) and the identity of his potential interlocutors (7); a conferencing and collaboration server (6) able to establish a collaboration session between said potential interlocutors (7) in order to select the most relevant one for establishing communication with the user (1), the application server (3) comprising means to initiate such collaboration session with the collected information.

## Description

The invention relates to a management system of a user's telephone call to establish communication between said user and a selected interlocutor.

Companies must deal efficiently with numerous telephone calls everyday from customers or suppliers who need to immediately contact one of their usual interlocutors.

That usual interlocutor might be busy when those telephone calls arrive. In such case, the call is simply rejected, or transferred to the voice mail or answering machine of his interlocutor, or automatically routed to another person within the local branch, or routed to a remote contact centre.

Consequently, the customer is frustrated because he must call again, and that without knowing when and if he will be able to reach his interlocutor. The caller might not get in time the information he needs.

Furthermore, prior art routing algorithms often end up connecting the call to a person that is unknown of the caller, which might be annoying if the subject of the call is confidential or delicate (for example concerning money, personal life,...). If the remote contact centre is in a foreign country, the interlocutor might have an unfamiliar accent.

Finally, the prior art also has an inconvenient for the company who must deal, practically and financially, with calling back the customer or supplier.

The purpose of the invention is to resolve the problems of the prior art by proposing, in particular, a management system of a user's telephone call wherein a collaboration session between potential interlocutors can be initiated by an application server in order to select the most relevant one for establishing communication with said user.

For that purpose, the invention relates to a management system of a user's telephone call to establish communication between said user and a selected interlocutor, said system comprising:
- a communication server to receive telephone calls and route them to an interactive voice response engine;
- an application server comprising means to initiate an identification session between the communication server, the interactive voice response engine and a database, in order to collect information concerning the identify of the user and the identity of his potential interlocutors;
- a conferencing and collaboration server able to establish a collaboration session between said potential interlocutors in order to select the most relevant one for establishing communication with the user, the application server comprising means to initiate such selection session with the collected information.

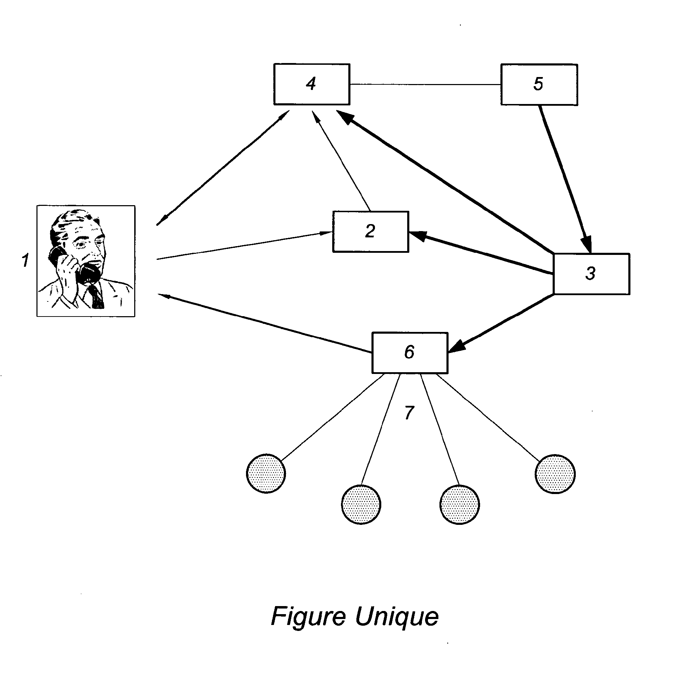

Other aspects and advantages of the invention will become apparent in the following description made with reference to the appended figure that represents a management system according to one embodiment of the invention, wherein arrows represent potential interactions between the different components of the system.

An embodiment of the invention according to the figure is here under described in relation with the call of a user 1 who wants to contact his personal advisor, i.e. privileged interlocutor, within a branch office of a company. The call is classically made by telephone but can also be made through a network such as the Internet.

If the interlocutor that the user 1 is trying to call is busy, the invention enables to manage the user's telephone call for establishing communication between said user 1 and a selected interlocutor.

The call is sent to a communication server 2 able to receive telephone calls and route them to a device or to another server. In particular, the communication server 2 is connected to an interactive voice response engine 4 in order to route the telephone call and communicate voice messages to the user 1.

In addition, the communication server 2 sends information concerning the telephone call, i.e. the telephone number, to an application server 3 in order to identify the users justifying the launching of the management system according to the invention.

If the user 1 calling must benefit from such a system, an identification session is initiated by the application server 3. To that end, the application server 3 comprises means to initiate such session between the communication server 2, the interactive voice response engine 4 and a database 5, in order to collect information concerning the identity of the user 1 and the identity of his potential interlocutors 7.

During the identification session, the interactive voice response engine 4 can identify, authenticate and welcome the user 1, in collaboration with the database 5.

In particular, when the identification can be made, the user 1 is authenticated by means of a request for authentication sent to said user by the interactive voice response engine 4. The authentication can be made by a voice recognition system (for example, the user 1 must pronounce his name when asked to in order to authenticate him) or by entering a code corresponding to his name in the database 5.

The interactive voice response engine 4 comprises means to communicate a message to the user during the identification session, said message being tunable according to the collected information.

Indeed, once the identification and authentication are made, the user 1 is aurally welcomed by the interactive voice response engine 4, the message comprising notably the reference to his identity.

Besides, as soon as the caller is identified, the application server 3 sends a request for information to the database 5 to check if the user is listed as a very important person (V.I.P.).

The application server 3 also collects the trusted list, i.e. the list of the potential interlocutors 7 of the user 1. Those potential interlocutors 7 are the user's usual interlocutors and optionally their managers as well as the welcome desk agent, for instance.

Finally, the application server 3 collects information in the database 5 concerning the current presence and availability status of those potential interlocutors 7. That information is compiled to be sent to the interactive voice response engine 4 which integrates that information in its tuned message.

The application server 3 also comprises means to initiate a collaboration session with the collected information by programming a conferencing and collaboration server 6. The conferencing and collaboration server 6 is able to establish a collaboration session between the potential interlocutors 7 in order to select the most relevant one for establishing communication with the user 1.

The conferencing and collaboration server 6 comprises means to establish communication between the potential interlocutors 7 during the collaboration session. According to one embodiment, the potential interlocutors 7 are connected through an instant messaging session in order for said potential interlocutors 7 to send collaboration messages to each other.

During that collaboration session, the potential interlocutors 7 receive a contextual list of the other potential interlocutors 7 displayed on their communication device and/or workstation as a pop-up list. The potential interlocutors 7 can send instant messages about which one of them is going to take the telephone call according to their respective current availability.

The conferencing and collaboration server 6 can also comprise means to establish Internet communication between the user 1 and his potential interlocutors 7 during the collaboration session. The Internet communication can be established through URL or email communication, for instance by using an URL sent by email to user 1.

Thanks to those means, the user 1 is optionally informed in real-time on his telephone or his computer of the messages exchanged by his potential interlocutors 7 concerning their acceptance or refusal to take his telephone call.

Once the interlocutor is selected, the information is sent to the application server 3. The application server 3 comprises means to communicate the identity of the selected interlocutor to the interactive voice response engine 4 in order for said interactive voice response engine 4 to communicate the identity of the selected interlocutor to the user 1.

Based on the real-time information that the user 1 is getting from the interactive voice response engine 4 or through the Internet, said user can optionally take decisions as regards his acceptance or refusal of the proposed interlocutor for his telephone call. His acceptance or refusal is indicated for instance by entering a dual-tone multi-frequency message (DTMF, consisting in tone-dialing on his telephone) or by using voice recognition.

The user's 1 instructions are received by the interactive voice response engine 4 which routes them to the conferencing and collaboration server 6 through the application server 3. Therefore, the potential interlocutors 7 are informed of the user's 1 instructions in real-time.

Alternatively, after the identification session, the application server 3 can establish an algorithm to determine, after the interlocutor initially wished by the user, which potential interlocutors 7 are the most likely to answer the telephone call, according to their presence and availability status (on/off line, schedule,...).

The application server 3 sends a message to the potential interlocutors 7, one after another, following the order determined by the algorithm, said message proposing to accept the call or pass to the next potential interlocutor 7.

## Claims

1. Management system of a user's (1) telephone call to establish communication between said user (1) and a selected interlocutor, said system comprising:
- a communication server (2) to receive telephone calls and route them to an interactive voice response engine (4);
- an application server (3) comprising means to initiate an identification session between the communication server (2), the interactive voice response engine (4) and a database (5), in order to collect information concerning the identify of the user (1) and the identity of his potential interlocutors (7);
- a conferencing and collaboration server (6) able to establish a collaboration session between said potential interlocutors (7) in order to select the most relevant one for establishing communication with the user (1), the application server (3) comprising means to initiate such collaboration session with the collected information.

2. Management system according to claim 1, wherein the interactive voice response engine (4) comprises means to communicate a message to the user (1) during the identification session, said message being tunable according to the collected information.

3. Management system according to any of claims 1 to 2, wherein the conferencing and collaboration server (6) comprises means to establish Internet communication between the user (1) and his potential interlocutors (7) during the collaboration session.

4. Management system according to claim 3, wherein the Internet communication is established through URL or email communication.

5. Management system according to any of claims 1 to 4, wherein the conferencing and collaboration server (6) comprises means to establish communication between the potential interlocutors (7) during the collaboration session.

6. Management system according to claim 5, wherein the potential interlocutors (7) are connected through an instant messaging session in order for potential interlocutors (7) to send collaboration messages to each other.

7. Management system according to any of claims 1 to 6, wherein the application server (3) comprises means to communicate the identity of the selected interlocutor to the interactive voice response engine (4) in order for said interactive voice response engine (4) to communicate the identity of the selected interlocutor to the user (1).
